# EUROPEAN PATENT SPECIFICATION

(11) **EP 2 647 295 B1**
(45) Date of publication and mention of the grant of the patent: **03.12.2014**
(21) Application number: 12162976.0
(22) Date of filing: 03.04.2012
(51) Int. Cl.: A23C 9/152, A23F 5/40, A23F 5/42, A23G 1/32, A23G 1/46

(54) **Foaming system for hot beverage comprising a (bi)carbonate salt**
Schäumungssystem für ein Heißgetränk mit einem (Bi)carbonatsalz
Système de moussage de boisson chaude comprenant un sel de (bi)carbonate

(43) Date of publication of application: 09.10.2013
(73) Proprietor: Friesland Brands B.V., 3818 LE Amersfoort (NL)
(72) Inventor: van Seeventer, Paul Bastiaan, 7944 HX Meppel (NL)
(74) Representative: Jansen, Cornelis Marinus

(56) References cited:
- WO-A1-98/34495
- US-A- 5 780 092

## Description

The invention relates to a powdered composition for preparing a beverage, to a method of making a beverage, and to the use of a (bi)carbonate salt product to enhance a foam property of a beverage.

Dry mixtures for making a hot beverage, such as coffee, often include a non-foaming or foaming creamer component in addition to a flavour component, such as instant coffee.

DE 44 07 361 A1 relates to a mixture for preparing cappuccino, wherein a carbonate salt or bicarbonate salt is present. In hot water, the (bi)carbonate can decompose, thereby generating carbon dioxide gas, which contributes to the foam-formation. Preferably an encapsulated acidulant is present. The acidulant, in an acid-base reaction, then enhances the decomposition reaction thereby generating even more carbon dioxide gas.

EP 2 025 238 A1 relates to a powdered soluble foamer ingredient which comprises a matrix containing carbohydrate and protein-like ingredient and entrapped gas under pressure, the gas being present in an amount to release upon addition of liquid at least 1 ml of gas under standard temperature and pressure conditions (STP) per gram of soluble foamer ingredient, wherein the powdered soluble foamer ingredient has a density of from 200g/l to 500g/l and has a closed porosity. Such particles are referred to in the art as foam booster products.

The preparation of creamer particles containing pressurised gas requires special equipment, which may make the preparation of the particles more complicated. Also, limitations exist with respect to the need for using specific ingredients, in particular in order to in view of negative nutritional or sensory changes (off taste) of the final product by the common use of high temperature and pressure processes for obtaining such foam booster products.

Further, such creamer particles may suffer from a relatively high sensitivity to moisture. Furthermore, leaking away of the pressurised gas during storage may be a problem, as it reduces the foaming properties of the creamer.

US 5,780,092 and WO 98/34495 also relate to instant coffee compositions, comprising a bicarbonate salt and an acidulant.

It is the present inventor's finding that in particular known powder compositions for preparing a foamed coffee or cocoa drink, comprising carbonate or bicarbonate and an acidulant, do not offer a satisfactory foam quality (in terms of smoothness, fine texture, foam stability) and quantity (in terms of foam height) in combination with good taste characteristics and an appealing foam colour of the coffee or cocoa drink.

It is an object of the present invention to provide an alternative powder composition for preparing coffee or a cocoa drink with satisfactory characteristics, also in the absence of a pressurised foaming ingredient.

In particular it is an object to provide a composition offering one or more improved characteristics, in particular with respect to foam properties, such to foam height, foam texture, foam stability, foam colour and taste of the coffee or cocoa drink.

One or more other objects of the present objections will be apparent from the description herein below.

It has now been found possible to provide a hot beverage, such as a coffee or cocoa drink, comprising a foam on top of the beverage, the foam having appealing characteristics, wherein use is made of a powdered composition containing a carbonate or bicarbonate in a specific form to prepare the beverage.

Accordingly, the present invention is directed to a powder composition for preparing a hot beverage having a foam on top of the beverage, in particular a coffee or cocoa drink, comprising
- a foamer or creamer component in particulate form;
- a combination of a bicarbonate or carbonate salt and an amphiphilic substance;
and optionally
- an instant flavour component in particulate form, in particular instant coffee or instant cocoa.

In principle, a powder composition according to the invention does not need to include a component providing the typical flavour and aroma of the beverage for which it is intended to be used, such as instant coffee or cocoa. A composition without this component can be used as an ingredient-product for formulating a final instant beverage-product, or can be offered as an end-product, *e.g*. to consumers as a foamer/creamer to be reconstituted in the beverage, such as coffee or a cocoa drink.

In accordance with the invention it has surprisingly been found possible to provide a hot beverage, in particular a coffee or cocoa drink, specifically a cappuccino drink, with a foam-topping having increased foam height, a finer foam texture, a foam with a whiter appearance or an increased foam stability, compared to a hot beverage obtained with a similar product wherein carbonate or bicarbonate was present without the amphiphilic substance.

It is in particular surprising that it is possible to quickly achieve foaming after bringing the composition comprising a combination of (bi)carbonate and an amphiphilic substance into contact with (hot) water.

Further, a powder composition according to the invention has a good shelf-life stability.

The invention further relates to a method for preparing a hot beverage, in particular a coffee or a cocoa drink, having a foam on top of the beverage, comprising reconstituting a composition according to the invention in a hot aqueous liquid. The aqueous liquid may in particular be selected from the group of water, an aqueous liquid comprising fat and/or non-fat cocoa parts to prepare a cocoa drink, milk and coffee. The term milk is used herein for dairy milk and dairy milk-substitutes, such as soy-milk, rice-milk, almond milk. The term milk also includes cocoa milk and other flavoured milk.

Further, the invention relates to the use of a combination of bicarbonate or carbonate salt and amphiphilic substance, the combination being in particulate form, as a foaming agent for a hot beverage having a foamed topping, such as a coffee of cocoa drink with a foamed topping. Such use is in particular selected from the use as a foam enhancer, more in particular to increase foam height, or to improve foam smoothness.

In particular, good results have been achieved with a combination of carbonate or bicarbonate salt and amphiphilic substance used together with porous foamer particles, wherein the pores of the foamer particles contain a gas phase of which the pressure is about 1 bara.

The term 'hot' in relation to a beverage is generally understood in the art. Typically, 'hot' means a temperature of at least 50 °C, in particular 60-100 °C, more in particular 80-95 °C.

The term "or" as used herein means "and/or" unless specified other wise.

The term "a" or "an" as used herein means "at least one" unless specified other wise.

When referring to a 'noun' (e.g. a compound, an additive etc.) in singular, the plural is meant to be included, unless specified otherwise.

The phrase "Carbonate or bicarbonate" is generally abbreviated herein as "(bi)carbonate".

The foamer or creamer component can in principle be selected from any known foamer or creamer in powder form, e.g. as commercially available or disclosed in the prior art cited herein. The particles are advantageously porous. Usually, such porous particles are prepared by spray drying techniques applying gas injection in the (high pressure) liquid feed to be atomised typically via the use of a high pressure atomisation nozzle. The foamer may comprise a foam booster product, containing particles wherein a pressurised gas is entrapped, e.g. as known from EP 2 025 238 A1.

However, there is no need for the particles to contain a pressurised gas. entrapped in the particles. Good results have been achieved with particles containing a gas phase of about atmospheric pressure (about 1 bara), in particular a gas phase having a pressure of 0.5-1.5 bara, more in particular 0.7-1.3 bara.

The constituents of the foamer or creamer component can be present as separate particles of the individual components or the particles may be made of a mixture of the constituents of the foamer.

The foamer or creamer may comprise dairy-protein or be free thereof.

The foamer or creamer may comprise dairy-fat or be free thereof.

The composition of the foamer or creamer may be based on a foamer or creamer composition as known in the art.

In an advantageous embodiment, the foamer or creamer comprises a protein (contributing to foaming), preferably a dairy protein, a vegetable fat and a filler, such as a carbohydrate filler.

Such a foamer or creamer composition according to the invention is in particular advantageous in that it allows the preparation of a hot beverage, especially a cappuccino drink, with a particularly attractive layer of foam. The foam advantageously has a smooth milky appearance. The foam may in particular have a cappuccino-alike foam or froth texture, giving a milky impression.

Particularly suitable as a source for the protein are skim milk powder, whey protein concentrate, whey powder, caseinate, and the like.

Particularly suitable as vegetable fat are palm kernel fat, coconut fat and the like.

Preferred fillers are carbohydrates. Particularly suitable fillers include hydrolysed starches, in particular hydrolysed starches having a DE of 10-45, glucose syrup, maltodextrins and lactose.

In particular, the composition may be based on Table 1.

**Table 1:**

| | **Usual** | **Preferred (wt. %)** | **More preferred (wt. %)** | **Specifically preferred (wt. %)** |
|---|---|---|---|---|
| **Foamer** | | | | |
| fat | 10-70 | 10-65 | 15-45 | 20-35 |
| protein | 2-20 | 4-20 | 5-15 | 6-12 |
| filler* | 20-70 | 25-70 | 35-60 | 40-55 |

| **Creamer** | | | | |
|---|---|---|---|---|
| fat | 10-70 | 10-65 | 20-55 | 20-45 |
| protein | 0-10 | 0.1-10 | 0.5-6 | 1.0-9 |
| filler* | 20-75 | 35-75 | 30-65 | 20-46 |

| | | | | |
|---|---|---|---|---|
| * preferably a carbohydrate | | | | |

In Table 1, per application, the fat, protein and filler contributions in different columns may be combined with one another; the table does not intend to disclose four isolated embodiments. For instance, a preferred amount of fat in a foamer may be combined with a most preferred protein range, and *vice versa.* Likewise, a lower limit for a fat content range may be combined with an upper limit of a fat content range in a different column.

The foamer or creamer may further contain one or more plasticizers to improve the robustness of the matrix. The presence of one or more plasticizers is in particular preferred for a foam booster. If present, the plasticizers are preferably selected from the group consisting of polyols or sugar alcohols, such as glycerol, mannitol, sorbitol, lactitol, erythritol, trehalose and/or lipids other than fat, such as fatty acids, monoglycerides, phospholipids.

In particular, the foamer may further include additional stabilizing agents to increase foam performance/quality such as the foam volume or stability, to stabilise pH or to prevent protein from flocculation (after reconstitution).

Preferred stabilisers are sodium or potassium citrates and orthophophates,

Further, a free flowing aid may be present, preferably silicon dioxide or tricalcium phosphate.

Additional emulsifiers (in addition to a (protein-based) foaming agent) do not need to be present in the foamer. If an additional emulsifier is desired, sodium stearoyl-2-lactylate may in particular be present.

The foamer or creamer component usually has a loose bulk density of at least 150 g/l. Usually the loose bulk density is 350 g/l or less, in particular in the range of 180-300 g/l, more in particular 200-240 g/l. A density within this range can be obtained by the person skilled in the art using known technology. For instance use can be made of gas injection into the aqueous feed slurry just before atomisation, which is done preferably with nitrogen gas. This allows preparation of products of such lower densities. Such particles typically have porous structures, in particular containing voids in the range of 5-30 micron.

In principle, the combination of (bi)carbonate and amphiphilic substance can comprise any food grade (bi)carbonate and amphiphilic substance. The (bi)carbonate and amphiphilic substance are generally present in distinct physical phases, that together, and optionally with one or more other phases, form particles with a hierarchical structure. In this specification, particles with a hierarchical structure are particles which are composed of two or more physical phases which physical phases are generally solid at 25 °C. The phases may be bound to each other by physical or chemical interaction at their contacting surfaces.

Typical examples of combinations having a hierarchical structure are coated or encapsulated (bi)carbonate particles and agglomerates of (bi)carbonate particles, particles of amphilic substance and - if present - particles of one or more other components.

The combination may in particular comprise one or more additional components selected from the group of fats (triglycerides), free flowing agents and anti-caking agents.

In a specific embodiment, the combination comprises (bi)carbonate salt particles which are encapsulated in or coated with the amphiphilic substance and optionally one or more other components. In such embodiment, the coating preferably is a powder coating. It is not necessary that essentially all of the surface of the (bi)carbonate salt particles is coated with or encapsulated in the amphiphilic substance and optionally other present component(s). A substantial part of the surface of the (bi)carbonate particles may remain uncovered with another substance. It is contemplated that this may be favourable for a relatively fast reconstitution rate, when preparing the beverage from the powder composition.

In a further embodiment, the combination of (bi)carbonate and amphiphilic substance is an agglomerate comprising (bi)carbonate particles, particles of the amphiphilic substance, and optionally particles of one or more further components.

The (bi)carbonate is typically the major component of the combination of (bi)carbonate and amphiphilic substance, usually providing more than 50 wt. % of the combination, preferably at least 85 wt. %, more preferably at least 92 wt. %, in particular at least 95 wt. % or at least 97. wt. %. The (bi)carbonate content of the combination, is usually 99.9 wt. % or less, preferably 99.5 wt. % or less, in particular 99.2wt. % or less.

The (bi)carbonate can be of any food grade carbonate or bicarbonate salt, preferably bicarbonate salt. An advantage of bicarbonate resides in its decomposition properties. A good contribution to foaming is readily achievable by contact with hot water without requiring additional acidulant (in addition to acid that may be present in the flavour/aroma component, such as coffee drink component). Usually the carbonate or bicarbonate salt is a sodium or potassium salt. Potassium is preferred from a health-and taste perspective.

The combination of (bi)carbonate and amphiphilic substance is usually in a particulate form. The particles are usually microparticles (particles having a size of 1-1000 µm).

Preferably, at least 90 wt.% of the particles is formed by particles having a size less than 200 µm, more preferably essentially all particles have a size of less than 200 µm, as determined by a screen test method, using a 200 µm (60 mesh) screen.

Preferably, maximally 85 wt. % of the particles is formed by particles having a size of 75 µm or more, as determined by a screen test method, using a 75 µm (200 mesh) screen.

The physical state of the combination of (bi)carbonate and amphiphilic substance is typically essentially solid at room temperature (25 °C). This means, that in addition to the (bi)carbonate the other phase (or phases) of the combination, is (are) essentially a solid at room temperature.

Accordingly, the amphiphilic substance generally has a melting point above room temperature. Preferably, it has a melting point or range above 40 °C, in particular in the range of 40-200 °C, in particular in the range of 50-190 °C, more in particular in the range of 60-180 °C. Without being bound by theory, it is contemplated that in particular in case the amphiphilic substance has a melting temperature above 100°C (or in specific application a melting temperature above the temperature the hot liquid used for preparing the beverage), a part of the (bi)carbonate surface of the combination is not covered with the amphiphilic substance or another component.

In case the particles are coated or encapsulated particles, these (slip) melting point ranges apply to the coating material or encapsulating material.

The combination is instable in hot water, i.e. at least a substantial part thereof, preferably essentially all of the combination disintegrates. The (phase comprising) the amphiphilic substance is also instable in hot water. As a result of contact with hot water the phase comprising the amphiphilic substance disintegrates, for instance by melting of at least a significant part of this phase or by dispersing/dissolving of a significant part of this phase. Thus, the carbonate or bicarbonate is allowed to be adequately contacted with the water, and carbon dioxide gas is formed, which formation is in particular caused by the heat of the hot water.

The amphiphilic substance, optionally in combination with other components, is considered to offer protection of the bicarbonate or carbonate against its environment, in particular during storage, thereby ensuring that during the shelf life of the product at least substantially all of the bicarbonate or carbonate remains available for generating carbon dioxide when using it to prepare a beverage. However, also in an embodiment wherein a substantial part of the surface of the (bi)carbonate particles is not covered with another material, such as in an agglomerate, a satisfactory shelf-life is achieved, whilst contributing to good foaming properties.

If present, the coating may be relatively thin and is thought to be effective also if not the complete surface of the (bi)carbonate particles is covered. The amount of coating can be about 15 wt. % or less, based on the weight of the (bi)carbonate), preferably 8 wt. % or less, more preferably 5 wt. % or less, in particular 3 wt. % or less. The amount of coating usually is at least 0.1 wt. %, based on the weight of the (bi)carbonate, preferably at least 0.5 wt. %, in particular at least 0.8 wt. %.

Suitable combinations of (bi)carbonate and amphiphilic substances may for example be commercially obtained from Kudos Blends LTD (Cleobury Mortimer, UK), such as KUDOS™ potassium bicarbonate HP grade, or be based on WO 2011/114151, wherein a coated product is mentioned for use in baking powder. The contents with respect to the coating characteristics and the particle characteristics and preparation of the coated particles of this document are incorporated by reference.

Moreover, the inventor found that - surprisingly - one or more additional components of the combination wherein the (bi)carbonate is present, in particular the amphiphilic substance, may contribute in a positive manner to a foam property. In particular, good results in this respect have been achieved with a combination comprising a fatty acid salt as amphiphilic substance. This is particularly surprising, since fatty acids, like most other emulsifiers such as monoglycerides and diglycerides, are generally considered as detrimental to foam properties, such as foam stability.

The fatty acid salt is usually selected from bivalent metal fatty acid salts, in particular alkaline earth metal fatty acid salts, preferably calcium fatty acid salts and magnesium fatty acid salts. In particular good results have been achieved with a bivalent metal salt, such as calcium, also with respect to improving a foam characteristic, notably the foam texture ((in particular a smaller average bubble size) and the foam colour (i.e. a more white foam colour), compared to a composition wherein the (bi)carbonate is not provided as a combination with an amphiphilic substance. Surprisingly, the use of a alkaline earth metal salt of a fatty acids, which is substantially insoluble in an aqueous liquid, can be used whilst obtaining a beverage with satisfactory organoleptic properties.

The fatty acid part of the salt is usually selected from fatty acids having 6-24 carbon atoms, preferably 12-18 carbon atoms. The fatty acid can be an unbranched or branched fatty acid. The fatty acid can be saturated or unsaturated. For instance, a smoother foam surface (with a more finely divided bubble structure or foam layer) has been observed with a combination of (bi)carbonate and a fatty acid salt, compared to a (bi)carbonate salt, without the fatty acid salt. Good results have been achieved with a salt of a non-branched saturated fatty acid, in particular with a stearate salt.

Other examples of suitable fatty acid salts are sorbates, octanoates, decanoates, dodecanoates, myristates, isostearates, oleates, linoleates, linolenates, ricinoleates, behenates, erucates, palmitates, eicosapentaenoates and docosahexaenoates. Evidently, the fatty acid salt may be mixture of fatty acid salts. For instance, the mixture may be obtained by saponification of a natural fat mixture, e.g. from coconut oil, palm oil, olive oil or other vegetable oils, fish oil, whale blubber, tallow and/or other animal fats.

The total content of amphiphilic substance in the combination, in particular the total content of fatty acid salt, usually is at least 15 wt. %, preferably at least 30 wt. %, in particular at least 50 wt. %, more at least 60 wt. %, based on the total weight of components other than (bi)carbonate salt in the combination. The content may be 100 % or less, preferably 98 wt. % or less, in particular 95 wt. % or less, more in particular 90 wt. % or less, based on the total weight of components other than (bi)carbonate salt in the combination.

Preferably, the combination of (bi)carbonate salt and amphiphilic substance, comprises a free flowing aid or anti caking agent, more preferably in the form of an inorganic oxide. In particular, the inorganic oxide may be selected from the group of magnesium oxides, calcium oxides, titanium oxides, silicates, silicon dioxide. The silicate may for instance be an alkali metal and/or alkaline earth silicate. An inorganic oxide may contribute to the shelf life stability of the (bi)carbonate salt particles before using the composition in the preparation of a beverage Other suitable free flowing aids or anti caking agents are known in the art and include tricalcium phosphate. Further, it is contemplated that at least in some embodiments, such additive may contribute to a desirable foam property, for example have a whitening effect (TiO₂).

The free flowing aid or anti caking agent, in particular the inorganic oxide content in the combination of (bi)carbonate and amphiphilic substance, usually is 85 wt. % or less, preferably 70 % or less, in particular 50 wt. % or less, more in particular 40 wt. % or less, based on the total weight of components other than (bi)carbonate salt in the combination. The free flowing aid or anti caking agent, in particular inorganic oxide content, preferably is 1 wt. % or more, in particular 5 wt. % or more, more in particular 40 wt. % or more, based on the total weight of components other than (bi)carbonate salt in the combination.

The combination of (bi)carbonate and amphiphilic substance, is generally dry before use, the moisture content preferably being less than 1.5 wt. % of the combination, in particular less than 1.0 wt. %, more in particular less then 0.25 wt. %. In case of coated (bi)carbonate particles, these ranges in particular also apply to the coating.

In an advantageous embodiment, the composition comprises the flavour and aroma component for the beverage for which the composition is intended to be used, in particular instant coffee or cocoa drink particles. In principle any flavour or aroma component may be used, e.g. those mentioned in the prior art cited herein.

In particular, in a composition for a coffee drink, moreover the instant coffee is considered to contribute to the formation of a foam with desirable properties, also in the absence of additional acidulant. In particular, for a coffee drink, instant coffee comprising Arabica coffee (preferably 50-100 wt % based on total coffee component) is advantageous for use in a composition according to the invention.

The combination of (bi)carbonate and amphiphilic substance, usually forms a minor portion of the powder composition. Usually, the content of the combination of (bi)carbonate salt and amphiphilic substance is less than 10 wt. %, preferably 5 wt. % or less, in particular 3 wt. % or less, more in particular about 2.0 wt. % or less , relative to the weight of the foamer or creamer. Usually, the content is 0.5 wt. % or more , in particular 1.0 wt. % or more, more in particular about 1.5 wt. % or more. The combination of (bi) carbonate and amphiphilic substance is usually introduced evenly distributed into the final foamer/creamer product. This is advantageously accomplished during a spray drying process at the moment the spray dried creamer or foamer particles are in an almost dry state (preferably <8 wt % moisture more preferably <5wt % moisture).

In a specific embodiment, the powder composition of the invention consists of
- 5 - 12 parts by weight of the foamer or creamer in particulate form;
- 0.05 - 0.4 parts by weight, preferably 0.1-0.3 parts by weight of the combination of (bi)carbonate and amphiphilic substance
- if present, 0.5 - 3.5 parts by weight flavour component particles, preferably coffee or cocoa drink particles,
and optionally up to 8.5 parts of one or more additional ingredients.

The one or more additional ingredients are usually selected from known additional ingredients for a powder composition for an instant hot beverage, such as a coffee or cocoa drink, e.g. as described in the cited prior art, and - if present - are usually - formulated in a known content.

In particular, the one or more ingredients may be present selected from the group of food acids, such as citric acid (preferably between 0.05-0.15 parts by weight), thickeners, stabilisers, proteins, foam stabilisers, aromas (other than those present in the flavour component particles), taste enhancers, and sweeteners (*e.g.* sugar).

In particular a sugar may be present in a fraction of 5-8 parts by weight.

Although the presence of a food acid may have an advantage, good result have been achieved in the absence of an added acidulant, i.e. an acidulant, e.g. a food acid, such as citric acid, added in addition to any acidulant that may be (naturally) present in the coffee or cocoa drink component or that may be present in the foamer or creamer particles Thus, in an advantageous embodiment, the composition is essentially free of such added acidulant, or at least of an added coated acidulant. With 'essentially free' is meant herein that no such acidulant is present in an amount significantly altering the decomposition rate of the (bi)carbonate. In particular, in such embodiment, the added acidulant content is less than 0.1 wt. % of the total composition, more in particular 0-0.01 wt. %.

In view of the foaming properties, the powder composition (for prerparing a hot beverage) preferably provides a liquid with a neutral or acidic pH after reconstitution in water. The pH is preferably lower than neutral pH and higher than the acidic pH at which the protein component, if present, will flocculate or becomes (partly) insoluble. In general, after reconstitution in hot water the pH is between about neutral pH and an acidic pH of up to 2 unit below neutral pH, in particular up to 1 unit below neutral pH. Typically, the apparent pH (the pH measured with a standard pH electrode at about 65 °C) is 7 or less, preferably 5-7.0, in particular 6-7.0, more in particular 6.2-6.7.

The composition may be packaged in a unit dosage packaging, such as a sachet, typically providing about 2-18 g per dosage, in particular 6-14 g per dosage, in a multi-use package for domestic use, e.g. a container of 50-500 g or in a multi-use container for use in a coffee or cocoa vending machine.

The composition according to the invention can be made by obtaining the desired ingredients, such as the above mentioned, e.g. by purchasing commercially available ingredients or preparing the ingredients in a manner known per se and mixing these. Thus, the invention further relates to a method for preparing a composition according to the invention, comprising providing a foamer or creamer component in particulate form; a bicarbonate or carbonate salt, said salt being present as a combination of bicarbonate or carbonate and an amphiphilic substance; optionally instant coffee, cocoa drink or another flavour component in particulate form; and optionally further ingredients in particulate form, suitable for use in a composition according to the invention, and blending the provided components.

The invention further relates to a method for preparing coffee or a cocoa drink, comprising reconstituting a composition according to the invention in a hot aqueous liquid. In an advantageous embodiment, the powder composition is provided in a vending machine, wherein the composition is reconstituted prior to dosing or during dosing the coffee or cocoa drink into a holder for drinking (cup, beaker), or after dosing the powder composition in the holder.

Usually, the ratio powder composition per 100ml water in a method for preparing coffee or a cocoa drink is in the range of 2-15 g / 100 ml.

Next, the invention is illustrated by the following examples

### Examples:

### Example 1

A blend of regular instant spray dried coffee (2 g) and foamer Cappa 25H (8 g), containing 25 wt.% hardened coconut fat, 41 wt.% of skim milk solids, 28 wt.% of glucose syrup solids DE 28 and <1.5 wt.% of dipotassium phosphate, having a bulk density of 240 gr/L (supplier FrieslandCampina Kievit) was mixed with various amounts of potassium bicarbonate. The potassium bicarbonate was either of standard quality (potassium bicarbonate FINE grade, supplied by Kudos Blends) or according to the current invention (potassium bicarbonate HP grade, supplied by Kudos Blends). The HP grade product is a combination of bicarbonate salt and an amphiphilic substance. Comparison was made with a mix without any addition of bicarbonate (the reference). Also the effect of additional food acid (citric acid) was evaluated. All samples were evaluated on taste as well. No taste deviations were observed for any of the samples.

| **Additives added** | **Foam height After 1 minute (mm)** | **Foam whiteness (1-5)** | **Foam structure (bubble size)** | **pH (65 °C)** |
|---|---|---|---|---|
| Ref. No additives. | 11 | 3 | Medium | 6.17 |
| FINE grade 200 mg | 14 | 3-4 | Medium | 6.76 |
| HP Grade 200 mg | 17 | 4 | Fine | 6.77 |
| HP Grade 150 mg | 14 | 3-4 | Fine | 6.70 |
| HP Grade 250 mg | 20 | 4 | Fine | 6.87 |
| FINE Grade 200 mg; citric acid 100 mg | 20 | 3-4 | Medium | 6.40 |
| HP Grade 200 mg; citric acid 100 mg | 23 | 4 | Fine | 6.35 |

**Colour:** in order of less to more white: a scale of 1 to 5 has been used.

**Foam structure or appearance:** bubble size was taken as main attribute for foam structure. The following groups of foam were distinguished here large, medium, and fine bubble size.

It can be clearly concluded that on all aspects of foam height, colour, and structure the best results were obtained with the formulations based upon the use of the HP grade bicarbonate, containing the amphiphilic substance.

### Example 2

The following example in table describes the effect of coffee amount and associated acidity profile after reconstituting the hot beverage mix, containing next to variations in coffee amount, 8 gram of the foamer Cappa 25H and 200 mg HP grade bicarbonate. Clearly the effect of the composition of the hot beverage mix can be observed. More specific, the amount of components with acidic character influenced the foam height and foam appearance.

| **Amount of coffee added added** | **Foam height After 1 minute (mm)** | **Foam whiteness (1-5)** | **Foam structure (bubble size)** | **pH (65C)** |
|---|---|---|---|---|
| 1 gr | 12 | 4 | Fine | 6.88 |
| 2 gr | 17 | 4 | Fine | 6.76 |
| 3 gr | 20 | 3-4 | Fine | 6.55 |

The above formulations were produced on a larger scale under factory conditions, preliminary accelerated shelf life results show similar superior performances as described in the previous examples. This also proofs the fact that the used bicarbonate according the present invention provides protection to humidity or other factors, that might hamper the performance of the bicarbonate in the final beverage mix, in the absence of the amphiphilic substance in combination with the bicarbonate.

## Claims

1. Powder composition for preparing a hot beverage having a foam on top of the beverage, in particular a coffee or cocoa drink, comprising
- a foamer or creamer component in particulate form;
- a combination of a bicarbonate or carbonate salt and an amphiphilic substance;
and optionally
- an instant flavour component in particulate form, in particular instant coffee or instant cocoa.

2. Composition according the claim 1, wherein the combination of bicarbonate or carbonate salt and amphiphilic substance comprises agglomerates of bicarbonate or carbonate salt particles and particles of the amphiphilic substance.

3. Composition according to claim 1, wherein the combination of bicarbonate or carbonate salt and amphiphilic substance comprises bicarbonate or carbonate salt particles that are partially or fully coated with the amphiphilic substance.

4. Composition according to any of the preceding claims, wherein the amphiphilic substance is a salt of a fatty acid, preferably a bivalent salt of a fatty acid, more preferably a calcium or magnesium salt of a fatty acid.

5. Composition according to claim 4, wherein the amphiphilic substance is the salt of an unbranched or branched fatty acid have 6-24 carbon atoms, in particular of a saturated unbranched or branched fatty acid have 6-24 carbon atoms, more preferably a stearate salt.

6. Composition according to any of the preceding claims, wherein the bicarbonate or carbonate salt and amphiphilic substance comprises a free flowing aid or anti-caking agent, such as an inorganic oxide or phosphate salt, preferably an inorganic oxide selected from the group of silicon dioxide and titanium oxide.

7. Composition according to any of the preceding claims, comprising
- 5 - 12 parts by weight of the foamer or creamer;
- 0.05 - 0.4 parts by weight of the combination of bicarbonate or carbonate and amphiphilic substance;
- 0.5 - 3.5 parts by weight instant flavour component particles;
- 0 - 8.5 parts of one or more additional ingredients, which additional ingredients may in particular be selected from the group of food acids, such as citric acid, thickeners, stabilisers, proteins, foam stabilisers, aromas, taste enhancers, and sweeteners (e.g. sugar).

8. Composition according to any of the preceding claims, wherein the content of the combination of bicarbonate or carbonate salt particles and amphiphilic substance is in the range of 0.5 - 5 wt. %, in particular in the range of 1.0 to 3 wt. % of the weight of the foamer or creamer.

9. Composition according to any of the preceding claims, wherein the composition is essentially free of added acidulants.

10. Composition according to any of the preceding claims, wherein the bicarbonate or carbonate salt is potassium bicarbonate.

11. Composition according to any of the preceding claims, wherein the composition is packaged in a dosage unit packaging.

12. Composition according to any of the preceding claims, wherein the composition is a composition for preparing a coffee drink, preferably a cappuccino drink.

13. Composition according to any of the preceding claims, wherein the composition comprises a foamer in particulate form, which foamer particles contain a gas phase, the gas phase having a total pressure of about 1 bara.

14. Composition according to any of the preceding claims, wherein the foamer or creamer has a loose bulk density in the range of 150-350 g/l, in particular in the range of 180-300 g/l.

15. Method for preparing a composition according to any of the preceding claims, comprising providing the following ingredients:
- a foamer or creamer component in particulate form;
- a combination of bicarbonate or carbonate salt and amphiphilic substance,;
- optionally instant flavour component particlescocoa; and
- optionally further ingredients in particulate form;
and blending said ingredients.

16. Method for preparing a hot beverage having a foam on top of the beverage, in particular a coffee or a cocoa drink, comprising reconstituting a composition according to any of the claims 1-14 in a hot aqueous liquid, in particular water.

## Patentansprüche

1. Pulverzusammensetzung zur Herstellung eines Heißgetränks mit einem Schaum auf dem Getränk, insbesondere ein Kaffee- oder Kakaogetränk, umfassend
- eine Schaum- oder Cremebildnerkomponente in partikulärer Form;
- eine Kombination eines Bicarbonat- oder Carbonatsalzes und einer amphiphilen Substanz;
und optional
- eine Instantaromakomponente in partikulärer Form, insbesondere Instantkaffee oder Instantkakao.

2. Zusammensetzung nach Anspruch 1, wobei die Kombination aus Bicarbonat- oder Carbonatsalz und amphiphiler Substanz Agglomerate von Bicarbonat- oder Carbonatsalzpartikeln und Partikeln der amphiphilen Substanz umfasst.

3. Zusammensetzung nach Anspruch 1, wobei die Kombination aus Bicarbonat- oder Carbonatsalz und amphiphiler Substanz Bicarbonat- oder Carbonatsalzpartikel umfasst, die teilweise oder vollständig mit der amphiphilen Substanz überzogen sind.

4. Zusammensetzung nach einem der vorhergehenden Ansprüche, wobei die amphiphile Substanz ein Salz einer Fettsäure ist, bevorzugt ein zweiwertiges Salz einer Fettsäure, bevorzugter ein Kalzium- oder Magnesiumsalz einer Fettsäure.

5. Zusammensetzung nach Anspruch 4, wobei die amphiphile Substanz das Salz einer unverzweigten oder verzweigten Fettsäure mit 6-24 Kohlenstoffatomen, insbesondere einer gesättigten unverzweigten oder verzweigten Fettsäure mit 6-24 Kohlenstoffatomen, bevorzugter ein Stearatsalz, ist.

6. Zusammensetzung nach einem der vorhergehenden Ansprüche, wobei das Bicarbonat- oder Carbonatsalz und die amphiphile Substanz eine Hilfe für freies Fließen oder ein Agens gegen Verbacken,wie beispielsweise ein anorganisches Oxid oder Phosphatsalz, umfasst, bevorzugt ein anorganisches Oxid, ausgewählt aus der Gruppe von Silikondioxid und Titanoxid.

7. Zusammensetzung nach einem der vorhergehenden Ansprüche, umfassend
- 5 - 12 Gewichtsteile des Schaum- oder Cremebildners;
- 0,05 - 0,4 Gewichtsteile der Kombination aus Bicarbonat oder Carbonat und der amphiphilen Substanz;
- 0,5 - 3,5 Gewichtsteile der Partikel der Instantaromakomponente;
- 0 - 8,5 Gewichtsteile von einer oder mehr zusätzlichen Zutaten, welche zusätzlichen Zutaten insbesondere aus der Gruppe der Lebensmittelsäuren, wie beispielsweise Zitronensäure, Dickungsmittel, Stabilisatoren, Proteine, Schaumstabilisatoren, Aromas, Geschmacksverstärker und Süßungsmittel (z. B. Zucker), ausgewählt sind.

8. Zusammensetzung nach einem der vorhergehenden Ansprüche, wobei der Inhalt der Kombination aus Bicarbonat- oder Carbonatsalzpartikeln und der amphiphilen Substanz im Bereich von 0,5 - 5 Gewichtsteile, insbesondere im Bereich von 1,0 - 3 Gewichtsteile, des Gewichts des Schaum- oder Cremebildners liegt.

9. Zusammensetzung nach einem der vorhergehenden Ansprüche, wobei die Zusammensetzung im Wesentlichen frei von hinzugefügten ansäuernden Mitteln ist.

10. Zusammensetzung nach einem der vorhergehenden Ansprüche, wobei das Bicarbonat- oder Carbonatsalz Kaliumbicarbonat ist.

11. Zusammensetzung nach einem der vorhergehenden Ansprüche, wobei die Zusammensetzung in eine Dosiereinheitverpackung verpackt ist.

12. Zusammensetzung nach einem der vorhergehenden Ansprüche, wobei die Zusammensetzung eine Zusammensetzung zur Herstellung eines Kaffeegetränks, insbesondere eines Cappuccinogetränks, ist.

13. Zusammensetzung nach einem der vorhergehenden Ansprüche, wobei die Zusammensetzung einen Schaumbildner in partikulärer Form umfasst, welche Schaumbildnerpartikel eine Gasphase enthalten, wobei die Gasphase einen Gesamtdruck von ungefähr 1 bar aufweist.

14. Zusammensetzung nach einem der vorhergehenden Ansprüche, wobei der Schaum- oder Cremebildner eine Massengutdichte im Bereich von 150-350 g/l, insbesondere im Bereich von 180-300 g/l aufweist.

15. Verfahren zur Herstellung einer Zusammensetzung nach einem der vorhergehenden Ansprüche, umfassend das Bereitstellen der folgenden Zutaten:
- einen Schaum- oder Cremebildner in partikulärer Form;
- eine Kombination aus Bicarbonat- oder Carbonatsalz und einer amphiphilen Substanz;
- optional Instantaroma-Komponentenpartikelkakao; und
- optional weitere Zutaten in partikulärer Form;
und das Mischen der Zutaten.

16. Verfahren zur Herstellung eines Heißgetränks mit einem Schaum auf dem Getränk, insbesondere ein Kaffee- oder Kakaogetränk, umfassend das Wiederherstellen einer Zusammensetzung nach einem der Ansprüche 1-14 in einer heißen wässrigen Flüssigkeit, insbesondere Wasser.

## Revendications

1. Composition de poudre destinée à préparer une boisson chaude qui présente de la mousse sur la partie supérieure de la boisson, en particulier une boisson de café ou de cacao, comprenant :
- un composant servant d'agent rendant mousseux ou crémeux sous une forme particulaire ;
- une combinaison d'un sel de bicarbonate ou de carbonate et d'une substance amphiphile ;
et éventuellement :
- un composant de saveur instantanée sous une forme particulaire, en particulier du café instantané ou du cacao instantané.

2. Composition selon la revendication 1, dans laquelle la combinaison de sel de bicarbonate ou de carbonate et de la substance amphiphile comprend des agglomérats de particules de sel de bicarbonate ou de carbonate et des particules de la substance amphiphile.

3. Composition selon la revendication 1, dans laquelle la combinaison de sel de bicarbonate ou de carbonate et de la substance amphiphile comprend des particules de sel de bicarbonate ou de carbonate qui sont en partie ou en totalité enrobées avec la substance amphiphile.

4. Composition selon l'une quelconque des revendications précédentes, dans laquelle la substance amphiphile est un sel d'un acide gras, de préférence un sel bivalent d'un acide gras, mieux encore un sel de calcium ou de magnésium d'un acide gras.

5. Composition selon la revendication 4, dans laquelle la substance amphiphile est le sel d'un l'acide gras non ramifié ou ramifié qui présente entre 6 et 24 atomes de carbone, en particulier d'un acide gras non ramifié ou ramifié saturé qui présente entre 6 et 24 atomes de carbone, mieux encore un sel de stéarate.

6. Composition selon l'une quelconque des revendications précédentes, dans laquelle la combinaison de sel de bicarbonate ou de carbonate et de la substance amphiphile comprend un agent fluidisant ou antiagglomérant, tel qu'un oxyde inorganique ou un sel de phosphate, de préférence un oxyde inorganique sélectionné dans le groupe constitué par un dioxyde de silicium et un oxyde de titane.

7. Composition selon l'une quelconque des revendications précédentes comprenant :
- entre 5 et 12 parties en poids d'agent rendant mousseux ou crémeux ;
- entre 0,05 et 0,4 parties en poids de la combinaison de bicarbonate ou de carbonate et de la substance amphiphile ;
- entre 0,5 et 3,5 parties en poids de particules de composant de saveur instantanée ;
- entre 0 et 8,5 parties d'une ou de plusieurs substances supplémentaires, lesquelles substances supplémentaires peuvent être sélectionnées en particulier dans le groupe constitué par des acides alimentaires, tels que l'acide citrique, des épaississants, des stabilisants, des protéines, des stabilisants de mousse, des arômes, des exhausteurs de goût, et des édulcorants (par exemple le sucre).

8. Composition selon l'une quelconque des revendications précédentes, dans laquelle la teneur de la combinaison des particules de sel de bicarbonate ou de carbonate et de la substance amphiphile se situe dans une plage comprise entre 0,5 % en poids et 5 % en poids, en particulier dans une plage comprise entre 1 % en poids et 3 % en poids du poids de l'agent rendant mousseux ou crémeux.

9. Composition selon l'une quelconque des revendications précédentes, dans laquelle la composition est sensiblement exempte d'agents acidulants ajoutés.

10. Composition selon l'une quelconque des revendications précédentes, dans laquelle le sel de bicarbonate ou de carbonate est du bicarbonate de potassium.

11. Composition selon l'une quelconque des revendications précédentes, dans laquelle la composition est emballée dans un emballage de dose.

12. Composition selon l'une quelconque des revendications précédentes, dans laquelle la composition est une composition destinée à préparer une boisson de café, de préférence une boisson de cappuccino.

13. Composition selon l'une quelconque des revendications précédentes, dans laquelle la composition comprend un agent rendant mousseux sous une forme particulaire, lesquelles particules d'agent rendant mousseux contiennent une phase gazeuse, la phase gazeuse présentant une pression totale approximativement égale à 1 bar.

14. Composition selon l'une quelconque des revendications précédentes, dans laquelle l'agent rendant mousseux ou crémeux présente une densité apparente de poudre non tassée qui se situe dans une plage comprise entre 150 g/l et 350 g/l, en particulier dans une plage comprise entre 180 g/l et 300 g/l.

15. Procédé destiné à préparer une composition selon l'une quelconque des revendications précédentes, comprenant les étapes consistant à :
fournir les substances suivantes :
- un composant servant d'agent rendant mousseux ou crémeux sous une forme particulaire ;
- une combinaison d'un sel de bicarbonate ou de carbonate et d'une substance amphiphile ;
- éventuellement des particules d'un composant de saveur instantanée ; et
- éventuellement d'autres substances sous une forme particulaire ; et
mélanger lesdites substances.

16. Procédé destiné à préparer une boisson chaude qui présente de la mousse sur la partie supérieure de la boisson, en particulier une boisson de café ou de cacao, comprenant une étape consistant à reconstituer une composition selon l'une quelconque des revendications 1 à 14 dans un liquide aqueux chaud, en particulier de l'eau.
